# EUROPÄISCHE PATENTSCHRIFT

(11) **EP 0 728 968 B1**
(45) Veröffentlichungstag und Bekanntmachung des Hinweises auf die Patenterteilung: **04.07.2001**
(21) Anmeldenummer: 96102452.8
(22) Anmeldetag: 19.02.1996
(51) Int. Cl.: F16K 7/06, F16K 7/12

(54) **Membranelement, damit ausgerüstetes Membranventil und Verfahren zur Herstellung des Membranelements**
Diaphragm element, diaphragm valve equipped with it and manufacturing process of the diaphragm element
Elément de diaphragme, soupape à diaphragme muni de celui-ci et procédé de manufacture de l'élément de diaphragme

(30) Priorität: 22.02.1995 DE 19506122
(43) Veröffentlichungstag der Anmeldung: 28.08.1996
(73) Patentinhaber: Bergemann, Dieter, Dr.-Ing., 70794 Filderstadt (DE)
(72) Erfinder: Bergemann, Dieter, Dr.-Ing., 70794 Filderstadt (DE)
(74) Vertreter: Herzog, Friedrich Joachim, Dipl.-Ing.

(56) Entgegenhaltungen:
- EP-A- 0 531 137
- BE-A- 825 205
- DE-A- 2 430 539
- DE-A- 2 633 801
- DE-A- 4 130 594
- DE-B- 1 167 137
- DE-C- 913 843
- DE-U- 1 897 222
- DE-U- 8 513 489
- GB-A- 1 569 827

## Beschreibung

Die Erfindung betrifft ein Membranelement aus einem, durch eine verstärkende Einlage bewehrten, gummielastischen Material für ein mittels externer Kräfte betätigbares Ventil sowie ein unter Verwendung dieses Membranelementes hergestelltes Membranventil und außerdem ein Verfahren zum Herstellen des Membranelementes.

Membranelemente aus gummielastischem Material sind für verschiedene Ventilarten, wie z.B. Membranventile und Quetschventile in Form von pneumatisch bzw. hydraulisch gesteuerten Ventilen bekannt, die als Absperrarmaturen in Rohr- und Schlauchleitungen für Gase, Flüssigkeiten, Dickstoffe und fließfähige Feststoffe verwendet werden.

Dabei zeichnen sich die oben erwähnten Quetschventile dadurch aus, dass als Membranelement eine sogenannte Schlauchmembran, d.h. eine in der Durchgangsstellung des Ventiles schlauchförmige bzw. hohlzylindrische Membran verwendet wird. Diese Schlauchmembran ist an ihren Enden kreisförmig umlaufend in Randbereichen an feststehenden starren Ventilteilen eingespannt, so dass bei geöffnetem Ventil der gesamte freie Querschnitt der Schlauchmembran als Strömungsquerschnitt für das zu fördernde Fließgut zur Verfügung steht. Die Betätigung eines solchen Quetschventils erfolgt mit Hilfe externer Kräfte, die mechanisch mit Hilfe eines stempelförmigen Elementes oder mit Hilfe eines fließfähigen Mediums, insbesondere Druckgas oder Druckflüssigkeit, erzeugt werden, wobei die externen Kräfte auf die Schlauchmembran einwirken, um diese ausgehend von ihrer zylindrischen Form so weit zusammenzuquetschen, dass der freie Querschnitt verringert, insbesondere auf Null reduziert wird, wobei Innenwandbereiche der Schlauchmembran dichtend aneinander anliegen und einen Strömungsquerschnitt sperren. Problematisch an den bekannten Quetschventilen mit Schlauchmembran ist, dass das Membranmaterial einer extremen Biegebeanspruchung ausgesetzt ist, da das Schlauchmaterial im Verschlussbereich um Biegewinkel bis zu 180° gebogen wird, während gleichzeitig an den eingespannten Enden der Schlauchmembran selbst bei relativ großer Länge derselben hohe Zugbelastungen auftreten, die auf die Dehnung des Schlauchmaterials beim Zusammenpressen derselben einerseits und zumindest an einem Schlauchende zusätzlich auf den mehr oder weniger hohen Druck des zu fördernden Mediums andererseits zurückzuführen sind. Weiterhin ergeben sich speziell bei Schlauchmembranen aufgrund der komplizierten Geometrie der Membran, insbesondere an deren Enden, hohe Fertigungskosten.

Im Hinblick auf die starke Beanspruchung bzw. Deformation des Membranmaterials ist es bei den bekannten Ventilen der hier betrachteten außerdem zwingend erforderlich, den Steuerdruck für die Ventilbetätigung mit Hilfe einer Druckregelung und eines Sicherheitsventils auf eine vorgegebene Differenz bezüglich des Förderdruckes für das zu fördernde Material zu begrenzen.

Ein typisches Quetschventil mit schlauchförmiger Membran ist beispielsweise in der DE-GM 8 513 489 U1 beschrieben, in der dargelegt ist, dass Quetschventile, die auch als Manschettenventile bezeichnet werden, den besonderen Vorteil haben, dass der Durchgang bei geöffnetem Ventil völlig frei ist, so dass praktisch keine Strömungsverluste auftreten, während andererseits für Flüssigkeiten, Gase und Suspensionen eine vollständige Abdichtung gewährleistet ist. Außerdem wird dargelegt, dass staubförmiges oder körniges Schüttgut beim Transport desselben längs einer das Quetsch- bzw. Manschettenventil enthaltenden Förderstrecke keine Schwierigkeiten bereitet, und dass auch bei sehr harten und/oder scharfkantigen Körnern des Schüttgutes der Verschleiß gering ist.

Gemäß den Lehren der zitierten Druckschrift erfolgt die Verbindung der als Absperrorgan wirkenden schlauchförmigen, flexiblen Manschette mit dem Ventilgehäuse dadurch, dass der Rand der Manschette an beiden Ende derselben jeweils zwischen dem Ventilgehäuse und einem daran stirnseitig angeschraubten Gegenflansch eingeklemmt wird, während die Steuerung bzw. das Öffnen und Schließen des bekannten Ventiles pneumatisch erfolgt, wobei die Manschette von außen derart mit einem Druckmittel druckbeaufschlagt wird, dass sie sich in ihrem mittleren Abschnitt flach zusammenfaltet.

Ein Quetschventil, bei dem das schlauchförmige Membranelement mechanisch mittels zu einer Drehbewegung antreibbaren Exenterelementen betätigt wird, ist in der EP 0 531 137 A1 beschrieben.

Ferner beschreibt die DE 4 130 594 A1 ein Membran-Durchgangsventil mit einer Flächenmembran, deren Rand zwischen ringförmigen Flanschbereichen eingespannt ist und die mit Hilfe eines etwa halbkugelförmigen Druckelementes mechanisch in den Strömungsquerschnitt des Ventiles bewegt werden kann, um diesen zu schließen. Bei diesem Membranventil ist die Flächenmembran in der Praxis ein relativ teueres Formteil mit einem zentralen Befestigungsbereich und einem verstärkten umlaufenden Randbereich, so dass die Herstellung des Membranelementes teuer ist.

In der DE-A-1 167 137 ist ein Schlauchventil für aggressive Medien führende Leitungen beschrieben, bei dem der durch im Gehäuse schwenkbar gelagerte Druckstücke einschnürbare Schlauch aus einem flexiblen und korrosionsfesten Werkstoff, wie beispielsweise Gummi oder Kunststoff, besteht. Der Schlauch ist an den Knickstellen auf der Innenseite mit Rippen versehen, die beim Einschnüren des Schlauches die beim Knicken gebildeten Hohlräume an den Knickstellen ausfüllen. Weiterhin sind auf der Außenseite des Schlauchs knopfartige Ansätze vorgesehen, die in entsprechenden Ausnehmungen von Mitnehmernuten an den Druckstücken eingreifen, damit der Schlauch beim Öffnen des Schlauchventils in seine geöffnete Position wieder mitgenommen wird. Auch hier ist der Schlauch an feststehenden Teilen des Ventils innerhalb des Ventils festgelegt, und durch die zusätzlichen Maßnahmen der innenliegenden Rippen und der außenliegenden knopfartigen Ansätze wird erst unter erheblichem Aufwand ein funktionierendes Ventil geschaffen. Die vorstehend allgemein geschilderte Problematik der Materialermüdung besteht auch hier.

Ausgehend vom Stand der Technik und vorstehend aufgezeigten Problematik liegt der Erfindung die Aufgabe zugrunde, ein Membranelement der eingangs angegebenen Art dahingehend zu verbessern, dass die Zug und Biegebelastung des Membranmaterials bei der Betätigung eines damit ausgerüsteten Ventiles erheblich reduziert wird und auch bei häufiger Ventilbetätigung eine lange Lebensdauer der Membran gewährleistet ist. Ferner liegt der Erfindung die Aufgabe zugrunde, ein Verfahren zum Herstellen eines solchen Membranelementes und ein unter Verwendung eines erfindungsgemäßen Membranelementes aufgebautes Ventil anzugeben.

Was das Membranelement selbst anbelangt, so wird die gestellte Aufgabe bei einem gattungsgemäßen Membranelement der eingangs angegebenen Art gemäß der Erfindung dadurch gelöst, dass das gummielastische Material mit einer gitterartigen verstärkenden Einlage aus sich kreuzenden, fadenförmigen, flexiblen Verstärkungselementen geringer Zugelastizität und hoher Zugsteifigkeit in Form eines rautenförmigen Gitters versehen ist, dass das Membranelement einen Randbereich aufweist, der längs eine stetigen, durch die Schnittlinien zweier sich unter einem Winkel durchdringender Zylinder mit etwa gleich großem Durchmesser definierten Randkurve bezüglich feststehender starrer Ventilteile einspannbar ist, dass das Membranelement bezüglich dieser Randkurve in zwei stabile Lagen bewegbar ist, in denen es eine zylindrische Form aufweist, derart, dass es in seiner einen stabilen Lage die Form eines Mantelflächenbereiches eines der sich durchdringenden Zylinder aufweist und in seiner anderen stabilen Lage die Form eines Mantelflächenbereiches des anderen der beiden einander durchdringenden Zylinder, und ferner derart, dass sich die Form der Bewehrung, welche insgesamt die Gestalt eines zylindrischen rautenförmigen Gitters hat, beim Umlegen der Membran von ihrer einen stabilen Lage in ihre andere stabile Lage wo verändert, dass sich das Längenverhältnis der Rautendiagonalen im wesentlichen umkehrt.

Es ist ein besonderer Vorteil des Membranelementes gemäß der Erfindung, dass dieses sowohl für die Offenstellung des zugehörigen Ventiles als auch für die Schließstellung desselben eine vorgegebene Gestalt hat und bei Betätigung des Ventiles lediglich von einer seiner beiden stabilen Endlagen in die andere stabile Endlage gebracht werden muss, wobei das Membranmaterial abweichend vom Stande der Technik nur begrenzt durch Zug- und Druckkräfte verformt und dabei gedehnt und gebogen wird, indem eine Überdehnung des Membranelementes über die stabilen Endlagen hinaus verhindert wird.

Weitere wesentliche Vorteile, die sich beim Einsatz des erfindungsgemäßen Membranelementes ergeben, bestehen darin, dass die Baulänge des Ventils im Vergleich zu konventionellen Schlauchventilen deutlich verringert werden kann, dass bezüglich der Druckdifferenz zwischen dem Förderdruck und dem Steuerdruck keine Beschränkungen bestehen, so dass auf eine entsprechende Druckregelung und ein Sicherheitsventil verzichtet werden kann, und dass für die Betätigung des Ventils nur ein geringes Volumen des Steuer-Druckmediums erforderlich ist, was energiesparend ist und eine vergleichsweise sehr schnelle Ventilbetätigung ermöglicht.

Was das Verfahren zum Herstellen eines Membranelementes gemäß der Erfindung anbelangt, so wird die gestellte Aufgabe dadurch gelöst, dass ein endloser Schlauch mit einer zweilagig gegensinnig gewickelten oder einer geflochtenen Bewehrung aus fadenförmigen Verstärkungselementen hergestellt und dann in axialer Richtung geteilt wird, vorzugsweise längs einer einzigen Schnittlinie aufgeschlitzt wird, und dass die Membranelemente aus den dabei erhaltenen in Querrichtung zylindrische gewölbten Längsstreifen durch Unterteilen der letzteren in Stücke der gewünschten Länge hergestellt werden.

Es ist ein wichtiger Vorteil des Verfahrens gemäß der Erfindung, dass zunächst unter Anwendung konventioneller Verfahren in einem kontinuierlichen Prozess ein endloser Schlauch preisgünstig hergestellt werden kann und dass dieser Schlauch einfach in Längsrichtung geteilt bzw. aufgeschlitzt wird, um bogenförmig gewölbte bzw. halbzylindrische Längsstreifen zu erhalten, die anschließend in Querrichtung in Membranelemente der gewünschten Länge unterteilt werden können. Auf diese Weise werden kostengünstig Membranelemente gemäß der Erfindung erhalten, die einfach zylindrisch gewölbte und im übrigen flache Bauteile mit gleichbleibender Wandstärke sind, während das Anformen verstärkter Randbereiche und dergleichen entfallen kann.

Was das Membranventil anbelangt, so wird die gestellte Aufgabe gelöst durch ein Membranventil mit einem Grundkörper mit einer axial durchgehenden, zur Längsmittelachse des Grundkörpers konzentrischen Durchlassöffnung und mit einer durch externe Kräfte zum Öffnen und Schließen des Ventils betätigbaren Membrananordnung, welches gemäß einer ersten vorteilhaften Variante der Erfindung dadurch gekennzeichnet ist, dass der Ventilkörper mit zwei zylindrischen Aussparungen versehen ist, die ausgehend von einander gegenüberliegenden Seitenflächen des Grundkörpers quer zu der Durchlassöffnung ausgerichtet sind und in der Ebene der Längsmittelachse tangential aneinandergrenzen, dass die Membrananordnung zwei Membranelemente nach einem der Ansprüche 1 bis 3 umfasst und dass die Membranelemente denselben Krümmungsradius haben wie die Aussparungen und bezüglich derselben jeweils durch ein Verschlussstück festgelegt sind, welches angrenzend an die Durchlassöffnung eine zylindrische, die Durchlassöffnung zu einer durchgehenden zylindrischen Öffnung ergänzende Wandfläche aufweist.

Weitere vorteilhafte Ausgestaltungen der Erfindung sind Gegenstand abhängiger Ansprüche.

Weitere Einzelheiten und Vorteile der Erfindung werden nachstehend anhand von Zeichnungen noch näher erläutert.

### Es zeigen:

- Fig. 1: eine perspektivische Explosionsdarstellung einer bevorzugten Ausführungsform eines Ventils gemäß der Erfindung;
- Fig. 1a: eine perspektivische Darstellung des Ventils gemäß Fig. 1 im zusammengebauten Zustand;
- Fig. 2: eine schematische Darstellung des inneren Teils eines Ventiles gemäß der Erfindung in der Schließstellung desselben;
- Fig. 3: eine der schematischen Darstellung gemäß Fig. 2 entsprechende Darstellung, jedoch für die Offenstellung des Ventiles;
- Fig. 4: eine Abwicklung des Membranelementes für den Fall, dass sich das Ventil in seiner Schließstellung (Fig. 2) befindet;
- Fig. 5: eine Abwicklung des Membranelementes für den Fall, dass sich das Ventil in seiner Offenstellung (Fig. 3) befindet;
- Fig. 6: eine perspektivische schematische Darstellung eines Ventiles gemäß Fig. 1 mit überstehenden, noch nicht festgelegten Membranelementen;
- Fig. 7: eine schematische perspektivische Explosionsdarstellung der wesentlichen Elemente einer abgewandelten Ausführungsform eines Ventiles gemäß der Erfindung und
- Fig. 8: eine perspektivische Darstellung des Ventils gemäß Fig. 7 mit einer mechanischen Betätigungsvorrichtung.

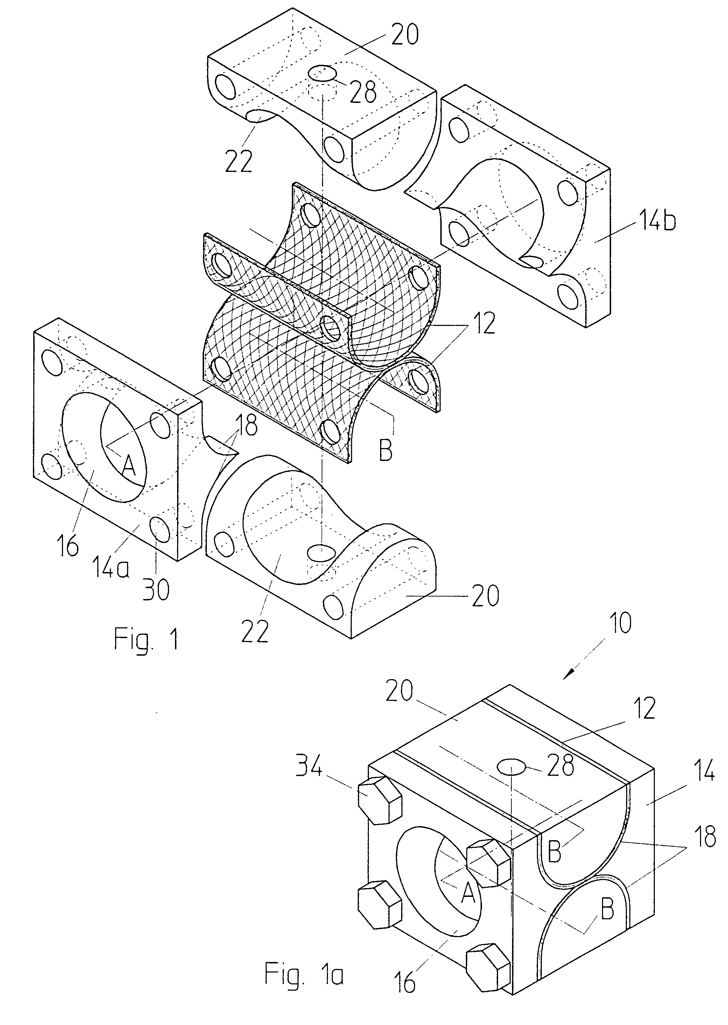

Im einzelnen zeigt Fig. 1 eine erste bevorzugte Ausführungsform eines Ventils 10 gemäß der Erfindung, das heißt, eines Ventiles 10 mit zwei erfindungsgemäßen Membranelementen 12.

Das Ventil 10 besitzt einen im Prinzip quaderförmigen Grundkörper 14 mit einer durchgehenden kreisrunden bzw. kreiszylindrischen Durchlassöffnung bzw. Bohrung 16. Der Grundkörper 14 ist beim Ausführungsbeispiel, wie in Fig. 1 zu erkennen ist, auf zwei einander gegenüberliegenden Seiten mit Aussparungen 18 versehen, die jeweils eine kreiszylindrische Form haben und quer zur Längsachse A des Grundkörpers 14 bzw. zur Mittelachse der Bohrung 16 derart angeordnet sind, dass die beiden halbzylindrischen Aussparungen 18 mindestens tangential aneinandergrenzen, was jedoch nur zu einem technisch normalerweise nicht ausreichenden Linienkontakt der Membranen führen würde. Tatsächlich sind die Aussparungen so dimensioniert, dass sie sich etwas überschneiden, damit sich zwischen den in ihrer Schließstellung befindlichen Membranen eine für die zu erwartenden Betriebsbedingungen ausreichend breite Kontaktfläche ergibt. Der Grundkörper wird durch die beiden Aussparungen 18 folglich in zwei Teilstücke 14a und 14b unterteilt. Diese Teilung des Grundkörpers lässt sich allerdings, wenn dies aus fertigungstechnischen Gründen oder im Hinblick auf den geplanten Einsatzzweck erwünscht ist, vermeiden, wenn die Breite des Grundkörpers entsprechend größer gewählt wird als die axiale Länge der halbzylindrischen Aussparungen 18.

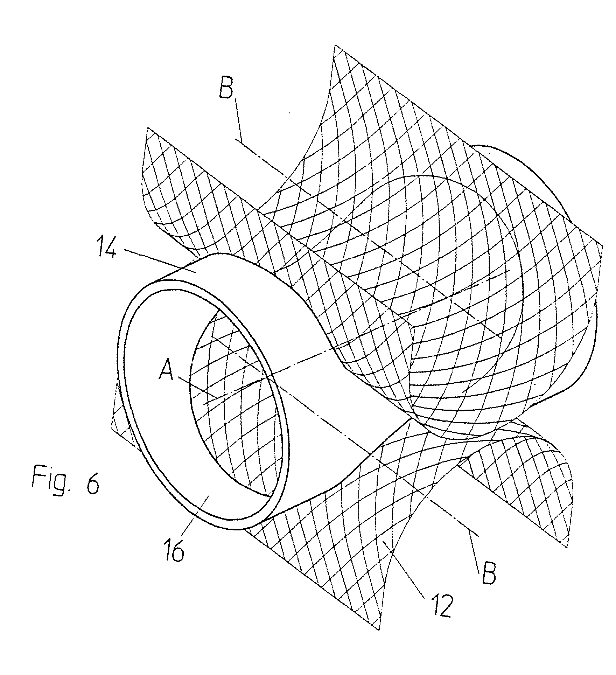

Bei der Montage des Ventiles 10 gemäß Fig. 1 wird in jede der Aussparungen 18 ein Membranelement 12 insbesondere mit einem zunächst seitlich über die Bohrung 16 überstehenden Rand, wie dies in Fig. 6 gezeigt ist, eingelegt. Anschließend wird über jeder der Membranen 12 jeweils ein als Klemmelement dienendes Verschlussstück 20 in der zugeordneten Aussparung 18 angeordnet. Die Verschlussstücke 20 sind dabei Bauteile, die im Prinzip die Form eines einer Aussparung 18 entsprechenden Halbzylinders haben, jedoch in ihrem mittleren Teil eine halbzylindrische Ausnehmung 22 aufweisen, deren Oberfläche als Anlagefläche für die zugeordnete Membran 12 die Innenwand der durchgehenden Bohrung 16 im Bereich der Aussparungen 18 zu einer durchgehenden zylindrischen Fläche ergänzt.

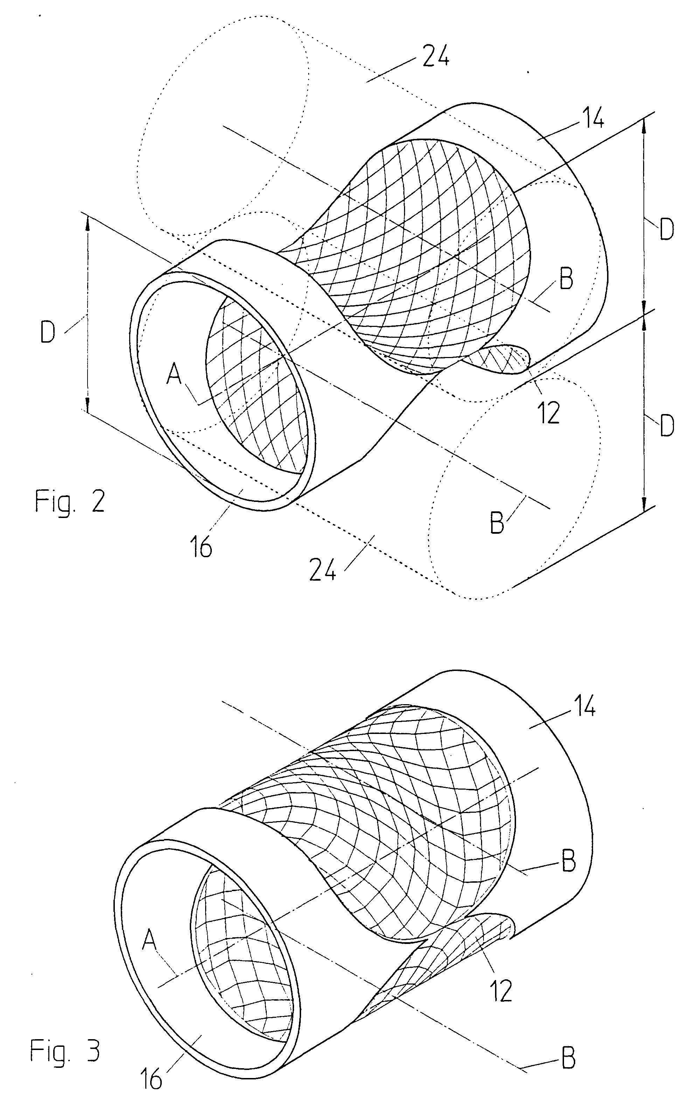

Bei dem Ausführungsbeispiel gemäß Fig. 1 sind die beiden Membranen 12 in der Gestalt, in der sie gemäß Fig. 2 und 6 in die Aussparungen 18 des Grundkörpers 14 eingelegt werden, in ihrer der Schließstellung des Ventiles 10 entsprechenden einen stabilen Lage angeordnet, wobei sie längs einer gemeinsamen Mantellinie aneinander anliegen und den Strömungsquerschnitt des Ventiles 10, d.h. die Bohrung 16 in Abwesenheit von irgendwelchen äußeren, auf die Membranen 12 einwirkenden Kräften vollständig schließen.

Wenn das Ventil gemäß Figur 1 in eine Förderleitung (nicht gezeigt) eingefügt ist, durch die ein unter einem gewissen Druck stehendes fließfähiges Medium gefördert werden soll, dann führt der Druck des fließfähigen Mediums, ausgehend von der vorstehend erläuterten Situation, in der die beiden Membranen 12 den Strömungsquerschnitt bzw. die Bohrung 16 vollständig schließen, zu einem Umlegen beider Membranen 12 in ihre jeweils andere stabile Lage, in der sie ebenfalls wieder eine halbzylindrische Form haben und beim Ausführungsbeispiel gewissermaßen als Teilstücke der Innenwand der Bohrung 16 flach an der Wand der halbzylindrischen Ausnehmung 22 des jeweiligen Verschlussstücks 20 anliegen.

Das Umlegen bzw. Umsteuern jeder der Membranen 12 erfolgt also, wie dies in Fig. 2 und 3 eigens dargestellt ist, aus einer der Schließstellung entsprechenden inneren Lage (Fig. 2), in der die Membran einen Oberflächenbereich eines mit gestrichelten Linien angedeuteten Zylinders 24 mit einer strichpunktierten Achse B bildet, in eine der Offenstellung entsprechende äußere Lage (Fig. 3), in der die Membran 12 einen Oberflächenbereich des durch die Gehäusebohrung 16 definierten Zylinders mit der Achse A bildet, wobei die beiden Achsen A und B bei dem betrachteten Ausführungsbeispiel senkrecht bzw. rechtwinklig zueinander verlaufen und einen vertikalen Abstand voneinander haben, der gleich dem Halbmesser der zylindrischen Bohrung 16 bzw. des Zylinders 24 ist.

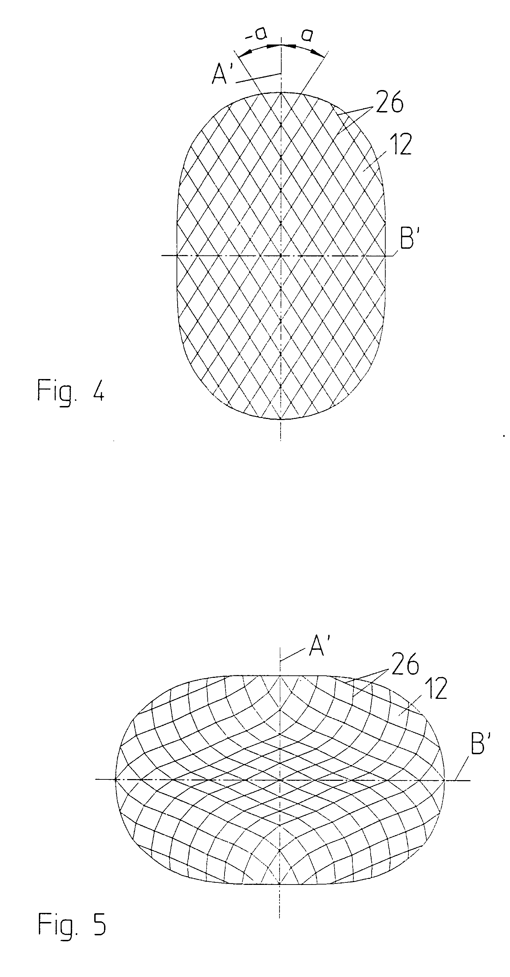

Betrachtet man nunmehr die in Fig. 4 und 5 gezeigten Abwicklungen einer der Membranen 12, so wird deutlich, dass die Formänderung der Membran beim Umlegen von der der Schließstellung entsprechenden einen stabilen Lage in die der Offenstellung bzw. Durchlassstellung entsprechende andere stabile Lage praktisch keine resultierende Änderung der Gesamtfläche der Membran 12 zur Folge hat, sondern nur eine interne Verschiebung in dem Membranmaterial, die speziell aus der in der Fig. 4 und 5 gezeigten Änderung des Verlaufs der fadenförmigen Verstärkungselemente 26 der gitterförmigen Bewehrung des gummielastischen Membranmaterials deutlich wird.

Im einzelnen verlaufen die Verstärkungselemente 26 der gitterförmigen Bewehrung in Fig. 4 bezüglich der mit strichpunktierten Linien eingezeichneten Projektionen A' und B' der beiden Zylinderachsen A und B geradlinig unter einem Winkel a bzw. -a, wobei die Winkel a und -a die beim Ausführungsbeispiel entgegengesetzt gleichen Steigungswinkel der Schraubenlinien sind, längs welcher die Bewehrung durch gegensinnige Bewicklung in das gummielastische Material eingebracht wird, wenn als Vorstufe zur Herstellung der Membranen ein endloser Schlauch hergestellt wird.

Wenn die Membran 12, mittels einer von außen auf sie einwirkenden Kraft, in die in Fig. 3 gezeigte Durchlassstellung umgelegt wird, dann hat dies gemäß der in Fig. 5 gezeigten Abwicklung der Membran 12 zur Folge, dass die gitterförmige Einlage ausgehend von der in Fig. 4 gezeigten Situation in Richtung der Achse A' verkürzt und in Richtung der Achse B' verlängert wird, wobei die Verstärkungselemente 26 ausgehend von der geradlinigen Form gemäß Fig. 4 eine S-förmig geschwungene Form annehmen, und zwar ohne ihre Länge insgesamt zu verändern, was auf die spezielle Form der gitterförmigen Verstärkung gemäß der Erfindung zurückzuführen ist, deren einzelne rautenförmige Felder, ähnlich wie bei einem aus gelenkig miteinander verbundenen Stäben hergestellten Parallelogramm derart verändert werden können, dass die Längenverhältnisse der beiden unterschiedlich langen Diagonalen umgekehrt werden. Durch Änderung der spitzen Winkel in stumpfe Winkel und umgekehrt werden somit beispielsweise aus stehenden Rauten liegende Rauten und umgekehrt.

Insgesamt wird auf diese Weise erreicht, dass im Membranmaterial selbst jeweils nur innerhalb der durch die Verstärkungselemente definierten Gitterfelder gewisse begrenzte Formänderungen des gummielastischen Materials eintreten, das man sich, um bei dem oben gewählten Bild zu bleiben, als gummielastische Bespannung eines Parallelogramms aus gelenkig miteinander verbundenen Stäben vorstellen kann, ohne dass in der Membran insgesamt die bei konventionellen Quetschventilen üblichen unkontrollierbaren hohen Zugkräfte auftreten würden, die bisher, insbesondere in den fest eingespannten Randbereichen, zur Materialermüdung und -zerstörung führten, was bei dem erfindungsgemäßen Membranelement vermieden wird.

Ein weiterer sehr wichtiger Vorteil der erfindungsgemäßen Membrankonstruktion besteht darin, dass die maximalen Biegewinkel für das Membranmaterial auf Werte von 90° begrenzt werden, da beim Umschlagen einer der Membranen 12 aus der Schließstellung gemäß Fig. 2 in die Durchlassstellung gemäß Fig. 3 und umgekehrt, der eingespannte Randbereich der Membran lediglich von einer Position, in der er einer Umfangslinie des einen Zylinders folgt, in eine Position bewegt wird, in der er einer Mantellinie des anderen Zylinders folgt und umgekehrt.

Das in Fig. 1 dargestellte Ventil kann pneumatisch bzw. hydraulisch betätigt werden, indem die Außenseiten der Membranen 12 mit einem Druckmittel beaufschlagt werden, was beispielsweise über Druckmittelöffnungen 28 geschehen kann, von denen eine in Fig. 1 im mittleren Teil des einen Verschlussstücks 14 sichtbar ist, wobei diese Druckmittelöffnung 28 in der Praxis eine Gewindebohrung zum Anschrauben eines Fittings für eine Druckmittelleitung (nicht gezeigt) sein kann. Weiterhin sind die beiden Teilstücke 14a und 14b des Grundkörpers 14 des in Fig. 1 gezeigten Ventils 10 ebenso wie die beiden Membranen 12 und die beiden Verschlussstücke 20 mit durchgehenden Bohrungen bzw. Öffnungen 32 versehen, die bei der Montage des Ventils fluchtend zueinander ausgerichtet werden und der Aufnahme von über die gesamte axiale Länge des Ventils durchgehenden Schraubbolzen 34 oder dergleichen dienen (Fig. 1a), die die Einzelteile des Ventils lösbar zu einer Einheit verbinden, wobei die Membranen 12 gleichzeitig druckfeste Dichtungen zwischen den Teilen 14a, 14b und 20 bilden. Außerdem ist an den beiden axialen Enden bzw. an den Stirnflächen des Ventils jeweils ein Anschluss 30 für eine Förderleitung (nicht gezeigt) für das zu fördernde Gut vorgesehen.

Bei der praktischen Realisierung von Ventilen gemäß der Erfindung wird als gummielastisches Membranmaterial eines der für Hochdruckschläuche üblichen und bewährten Materialien, insbesondere ein natürlicher oder synthetischer Gummi verwendet, welcher vorzugsweise erst nach dem Zerteilen bzw. Aufschlitzen des Schlauches in Längsrichtung und erst nachdem die Schlauchteile in die für die Membranelemente gewünschte Form gebracht sind, vulkanisiert bzw. vernetzt wird, um so die Membranelemente in die für die Montage des Ventils gewünschte Form zu bringen und dessen Zusammenbau zu erleichtern.

Weiterhin werden die Membranen je nach dem angestrebten Einsatzzweck des Ventils ausgewählt, beispielsweise hinsichtlich ihrer Abriebfestigkeit oder ihrer Verträglichkeit mit bestimmten Chemikalien oder auch bezüglich ihrer Zulässigkeit für die Förderung von Lebensmitteln, und mit einer Materialstärke von vorzugsweise 5 bis 20 mm hergestellt. Für die fadenförmigen Verstärkungselemente werden Kunststoffe mit geeigneten Eigenschaften ausgewählt. Die Bewehrung kann ferner aus den bei Kraftfahrzeugreifen bekannten Stahlcordmaterialien bestehen.

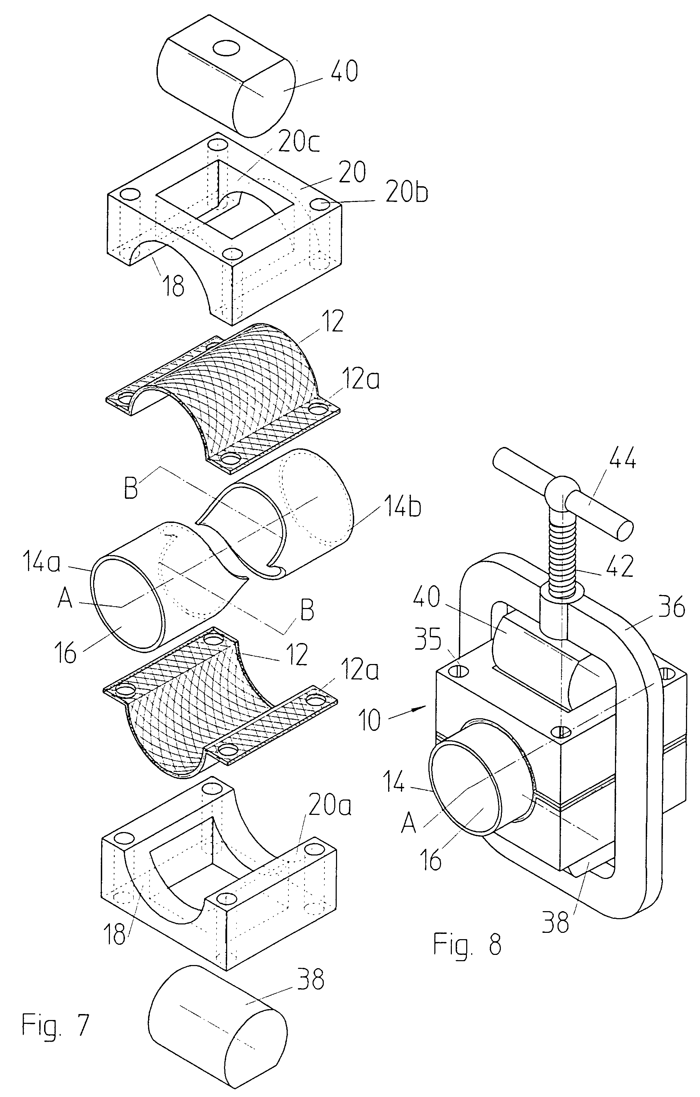

In Fig. 7 und 8 ist ein abgewandeltes Ausführungsbeispiel eines Membranventils gemäß der Erfindung gezeigt.

Bei diesem Ausführungsbeispiel ist der Grundkörper des Ventils durch zwei rohrförmige Teilstücke 14a und 14b gebildet, welche ähnlich, wie dies anhand von Fig. 1 erläutert wurde, dadurch aus einem zylindrischen, durchgehenden Rohr entstehen, dass auf der gegenüberliegenden Seite des Rohres, jeweils eine zylindrische Aussparung 18 erzeugt wird.

Bei dem betrachteten zweiten Ausführungsbeispiel werden die Membranelemente 12 als halbzylindrische Schalen im Bereich der Aussparungen 18 von außen an den rohrförmigen Grundkörper bzw. an dessen Teilstücke 14a und 14b angelegt und an den Verschlussstücken 20 befestigt, welche halbzylindrische Ausnehmungen 22 aufweisen und die Teilstücke 14a und 14b auf ihrem äußeren Umfang umschließen, wobei die Verschlussstücke 20 die axialen Enden der Membranelemente 12 gegen den Umfang der Teilstücke 14a und 14b pressen und seitliche Randbereiche der Membranelemente 12 zwischen ihren Randbereichen 20a einklemmen, wenn sie mit Hilfe von Schraubbolzen oder dergleichen miteinander und mit den Membranen, sowie den Teilstücken 14a, 14b zu einer Baueinheit verbunden werden. Dabei durchgreifen die in Fig. 7 nicht gezeigten aber in Fig. 8 an dem montierten Ventil angedeuteten Schraubbolzen 35 oder dergleichen fluchtend zueinander ausgerichtete Bohrungen 20b in den Ecken der Verschlussstücke 20 sowie Öffnungen 12a in den axial verlaufenden Randbereichen der Membranelemente 12.

Bei dem Ausführungsbeispiel gemäß Fig. 7 und 8 sind die Membranelemente 12 derart ausgebildet, dass sie im unverformten Zustand den vollen Querschnitt der zylindrischen Durchlassöffnung 16 freigeben, der durch die rohrförmigen Teilstücke 14a, 14b definiert wird.

Für das Ventil gemäß Fig. 7 und 8 ist ferner eine mechanische Betätigungsvorrichtung vorgesehen, die in Fig. 8 schematisch als eine Art von Schraubzwinge dargestellt ist, bei der im Inneren eines im Prinzip rechteckigen, fensterförmigen Rahmens 36, angrenzend an den unteren Schenkel desselben, ein mit dem Rahmen fest verbundenes Klemmstück 38 angeordnet ist, während ein bewegliches Klemmstück 40 am freien Ende einer Spindel 42 drehbar montiert ist, die mit einem Spindelgewinde im oberen Schenkel des Rahmens 36 zusammenwirkt und mit Hilfe eines Handgriffs 44 gedreht werden kann, um die Klemmstücke 38 und 40 aufeinander zu und voneinander weg zu bewegen.

Die Klemmstücke 38, 40 sind so dimensioniert, dass sie fensterförmige, rechteckige Öffnungen 20c der Verschlussstücke 20 durchgreifen können und von diesen geführt werden. Außerdem sind die Klemmstücke 38 und 40 im Bereich ihrer einander und den Membranelementen 12 zugewandten Innenflächen zylindrisch bzw. in Form von Halbzylindern ausgebildet, die der Zylinderform der Aussparungen 18 entsprechen.

Wenn die Klemmstücke 38 und 40 ausgehend von einem Zustand, in dem das Ventil voll geöffnet ist und in dem sie einen Abstand voneinander haben, der mindestens gleich dem Durchmesser des rohrförmigen Ventilkörpers bzw. der Teilstücke 14a und 14b desselben ist, durch Verdrehen der Spindel 42 aufeinander zu bewegt werden, dann wird in die Membranelemente 12, ausgehend von der zunächst nach außen gewölbten Mitte derselben, eine zunehmend tiefere zylindrische Vertiefung hineingedrückt, bis die Membranen 12, abgesehen von ihren eingespannten Randbereichen, voll in die Aussparungen 18 eingelegt sind und sich in der Ebene der Längsmittelachse des Ventils tangential berühren, und dabei die Durchlassöffnung 16 des Ventils vollständig sperren. Die zweite stabile Lage der Membranen 12 entspricht dabei der in Fig. 1 gezeigten stabilen Lage, d.h. der Schließstellung.

Bezüglich der Verformung der Membranen 12 bei dem Ausführungsbeispiel gemäß Fig. 7 und 8 gelten die ausführlichen Ausführungen bezüglich der Verformung der Membranen bei dem Ausführungsbeispiel gemäß Fig. 1, mit der Maßgabe, dass die Membranen 12 bei dem Ausführungsbeispiel gemäß Fig. 7 und 8 zunächst so hergestellt und montiert werden, dass sich für das Ventil die Offenstellung ergibt, und dass dann durch mechanische Deformation der Membranen 12 mit Hilfe der Betätigungsvorrichtung gemäß Fig. 8, die Schließstellung des Ventils herbeigeführt wird.

Auch bei dem Ausführungsbeispiel gemäß Fig. 7 und 8 werden eine Überdehnung des Membranmaterials und Biegewinkel von mehr als 90° wieder zuverlässig vermieden, so dass eine hohe Lebensdauer und Zuverlässigkeit des Ventils gewährleistet ist.

Im übrigen versteht es sich, dass auch bei dem Ventil gemäß Fig. 7 und 8 eine entsprechende pneumatische oder hydraulische Betätigung erfolgen kann wie in Fig. 1a.

Insgesamt wird aus der vorstehenden Beschreibung deutlich, dass gemäß der Erfindung ein auf einem völlig neuen Prinzip basierendes Membranelement entwickelt wurde, welches zwei stabile Endlagen einnehmen kann, in denen es durch gehäusefeste Ventile abgestützt werden kann, so dass eine Überdehnung des Membranmaterials zuverlässig vermieden wird, wenn dieses aus seiner einen Lage in der es in eine erste Richtung gewölbt ist, umgelegt und in seiner anderen Lage in die entgegengesetzte Richtung ausgewölbt wird, wobei gleichzeitig das Längenverhältnis von Längs- zu Quererstreckung umgekehrt wird, während das Membranmaterial längs einer geschlossenen Randkurve eingespannt bleibt, welche durch einander durchdringende Zylinder definiert ist.

## Patentansprüche

1. Membranelement (12) aus einem, durch eine verstarkende Einlage bewehrten, gummielastischen Material für ein mittels externer Kräfte betätigbares Ventil (10),
dadurch gekennzeichnet, dass
das gummielastische Material mit einer gitterartigen verstärkenden Einlage aus sich kreuzenden, fadenförmigen, flexiblen Verstärkungselementen (26) geringer Zugelastizität und hoher Zugsteifigkeit in Form eines rautenförmigen Gitters versehen ist, dass das Membranelement (12) einen Randbereich aufweist, der längst einer stetigen, durch die Schnittlinien zweier sich unter einem Winkel durchdringender Zylinder (16, 24) mit etwa gleich großem Durchmesser definierten Randkurve bezüglich feststehender starrer Ventilteile einspannbar ist, dass das Membranelement (12) bezüglich dieser Randkurve in zwei stabile Lagen bewegbar ist, in denen es eine zylindrische Form aufweist, derart, dass es in seiner einen stabilen Lage die Form eines Mantelflächenbereiches eines (16) der sich durchdringenden Zylinder aufweist und in seiner anderen stabilen Lage die Form eines Mantelflächenbereiches des anderen (24) der beiden einander durchdringenden Zylinder, und ferner derart, dass sich die Form der Bewehrung (26), welche insgesamt die Gestalt eines zylindrischen rautenförmigen Gitters hat, beim Umlegen der Membran (12) von ihrer einen stabilen Lage in ihre andere stabile Lage so verändert, dass sich das Längenverhältnis der Rautendiagonalen im wesentlichen umkehrt.

2. Membran nach Anspruch 1, dadurch gekennzeichnet, dass
die gitterförmige Bewehrung eine durch gegensinniges Bewickeln einer gummielastischen Schicht mit den fadenförmigen Verstärkungselementen (26) herstellte Bewehrung ist.

3. Membran nach Anspruch 1, dadurch gekennzeichnet, dass
die gitterförmige Bewehrung (26) eine geflochtene Bewehrung ist.

4. Verfahren zum Herstellen eines Membranelementes (12) nach einem der Ansprüche 1 bis 3, dadurch gekennzeichnet, dass ein endloser Schlauch mit einer zweilagig, gegensinnig gewickelten oder einer geflochtenen Bewehrung aus fadenförmigen Verstärkungselementen (26) in axialer Richtung geteilt wird und dass die Membranelemente (12) aus den dabei erhaltenen, in Querrichtung zylinderförmig gewölbten Längsstreifen durch Unterteilen der letzteren in Stücke der gewünschten Länge hergestellt werden.

5. Membranventil mit einem Grundkörper mit einer axial durchgehenden, zur Längsmittelachse (A) des Grundkörpers (14) konzentrischen Durchlassöffnung (16) und mit einer durch externe Kräfte zum Öffnen und Schließen des Ventils (10) betätigbaren Membrananordnung,
dadurch gekennzeichnet, dass
der Ventilkörper (14) mit zwei zylindrischen Aussparungen (18) versehen ist, die ausgehend von einander gegenüberliegenden Seitenflächen des Grundkörpers (14) quer zu der Durchlassöffnung (16) ausgerichtet sind und in der Ebene der Längsmittelachse tangential aneinandergrenzen, dass die Membrananordnung zwei Membranelemente (12) nach einem der Ansprüche 1 bis 3 umfasst und dass die Membranelemente (12) denselben Krümmungsradius haben wie die Aussparungen (18) und bezüglich derselben jeweils durch ein Verschlussstück (20) festgelegt sind, welches angrenzend an die Durchlassöffnung (16) eine zylindrische, die Durchlassöffnung zu einer durchgehenden zylindrischen Öffnung ergänzende Wandfläche aufweist.

6. Membranventil nach Anspruch 5, dadurch gekennzeichnet, dass der Ventilkörper im wesentlichen quaderförmig ausgebildet ist und dass die Verschlussstücke (20) in den Aussparungen (18) desselben angeordnet und halbzylindrisch mit einer halbzylindrischen, der Durchlassöffnung (16) zugewandten und diese ergänzenden Ausnehmung (22) ausgebildet sind.

7. Membranventil nach Anspruch 5, dadurch gekennzeichnet, dass der Ventilkörper im wesentlichen rohrförmig ausgebildet ist und dass die Verschlussstücke (20) als halbzylindrische Schalen ausgebildet sind und den Ventilkörper von außen umschließen.

## Claims

1. A membrane element (12) consisting of a rubber-elastic material reinforced by a reinforcing insert for a valve (10) actuated by external force,
characterised in that
the rubber-elastic material is provided with a grid-like reinforcing insert consisting of crossing, filamentary, flexible reinforcement elements (26) with low elasticity of tension and a high tensile rigidity in the form of a diamond-shaped grid; the membrane element (12) has an edge that can be clamped to fixed, rigid valve parts along a continuous edge curve defined by the intersection lines of two cylinders (16, 24) with approximately the same diameter that penetrate each other at an angle; the membrane element (12) can move into two stable positions in reference to this edge curve in which the membrane element assumes a cylindrical shape; in one of its stable positions, it assumes the shape of a lateral surface area of one (16) of the cylinder that penetrate each other, and in its other stable position it assumes the shape of a lateral surface area of the other (24) of the two cylinders that penetrate each other; in addition, the shape of the reinforcement (26) that overall has the design of a cylindrical, diamond-shaped grid changes from one stable position to the other stable position when the membrane (12) reverses so that the ratio of the lengths of the diagonals of the diamond basically reverses.

2. A membrane according to claim 1, characterised in that the grid-shaped reinforcement is created by winding in opposite directions a rubber-elastic layer with the filamentary reinforcing elements (26).

3. A membrane according to claim 1, characterised in that the grid-shaped reinforcement (26) is a plaited reinforcement.

4. A method to manufacture a membrane element (12) according to one of claims 1-3, characterised in that a continuous tube with a two-layer reinforcement plaited or wound in opposite directions consisting of filamentary reinforcement elements (26) is divided in an axial direction, and the membrane elements (12) are created from the obtained long strips that cylindrically bulge in a transverse direction by dividing the lengthwise strips into pieces of desired length.

5. A membrane valve with a basic body that has an axially continuous opening (16) concentric to the lengthwise midaxis (A) of the basic body (14), and with a membrane arrangement that can be actuated by external force to open and close the valve (10),
characterised in that
the valve body (14) is provided with two cylindrical cutouts (18) that are perpendicular to the opening (16) proceeding from opposing side surfaces of the basic body, and they tangentially neighbour each other in the plane of the lengthwise axis; the membrane arrangement comprises two membrane elements (12) according to one of claims 1-3, and the membrane elements (12) have the same radius curvature as the cutouts (18), and they are fixed in relation to the cutouts by a sealing piece (20) that has a cylindrical wall area neighbouring the opening (16) that supplements the opening to form a continuous cylindrical opening.

6. A membrane valve according to claim 5, characterised in that the valve body is essentially cuboid, and the sealing pieces (20) are in the cutouts (18) of the valve body and are half-cylindrical with a half-cylindrical recess (22) facing the opening (16) and supplementing it.

7. A membrane valve according to claim 5, characterised in that the valve body is essentially tubular, and that the sealing pieces (20) are designed as half-cylindrical shells that seal the valve body from the outside.

## Revendications

1. Elément de membrane (12) dans un matériau élastique caoutchouté, armé par une garniture de renfort, pour une soupape (10) actionnable au moyen de forces externes, caractérisé en ce que
le matériau élastique caoutchouté est muni d'une garniture de renfort en forme de grille rhomboïdale composée d'éléments de renfort longilignes, flexibles se croisant (26) et présentant une faible élasticité de traction et une grande rigidité de traction, que l'élément de membrane (12) présente une zone périphérique pouvant être fixée le long d'une courbe périphérique continue, définie par les intersections de deux cylindres (16, 24) de diamètre similaire s'emboîtant sous un angle, à des pièces fixes et rigides de la soupape, que, par rapport à cette courbe périphérique, l'élément de membrane (12) peut être amené dans deux positions stables dans lesquelles il présente une forme cylindrique, que, dans l'une de ses positions stables, il présente la forme d'une zone de surface latérale de l'un des cylindres (16) qui s'emboîtent et, dans son autre position stable, la forme d'une zone de surface latérale de l'autre des deux cylindres (24) s'emboîtant et, en outre, de façon à ce que la forme de l'armature (26), qui a globalement la forme d'une grille cylindrique rhomboïdale, se modifie lors du changement de position de la membrane (12) de l'une de ses positions stables dans l'autre position stable se modifie de telle sorte que le rapport longitudinal des diagonales rhomboïdales est inversé.

2. Membrane selon la revendication 1, caractérisée en ce que l'armature en forme de grille est une armature fabriquée par un bobinage en sens inverse d'une couche élastique caoutchoutée avec les éléments de renfort (26) longilignes.

3. Membrane selon la revendication 1, caractérisée en ce que l'armature en forme de grille (26) est une armature tressée.

4. Procédé pour la fabrication d'un élément de membrane (12) selon l'une des revendications 1 à 3, caractérisé en ce qu'un tuyau sans fin avec une armature bi-couche bobinée dans le sens inverse ou une armature tressée en éléments de renfort (26) longilignes est divisé dans le sens axial et que les éléments de membrane (12) sont confectionnés à partir des bandes longitudinales voûtées transversalement de façon cylindrique obtenues, en divisant celles-ci en pièces de la longueur voulue.

5. Soupape à membrane avec un corps de base avec une ouverture de passage (16) concentrique allant de part en part dans le sens axial par rapport à l'axe longitudinal médian (A) du corps de base (14) et avec une disposition des membranes actionnable par des forces externes pour l'ouverture et la fermeture de la soupape (10), caractérisée en ce que le corps de soupape (14) est muni de deux évidements cylindriques (18), alignés, à partir de surfaces latérales opposées du corps de base (14), dans le sens transversal par rapport à l'ouverture de passage (16) et qui se touchent au niveau de l'axe longitudinal médian de façon tangentielle, que la disposition des membranes comprend deux éléments de membrane (12) selon l'une des revendications 1 à 3 et que les éléments de membrane (12) ont le même rayon de courbure que les évidements (18) et qu'ils sont fixés, par rapport aux évidements, par une pièce de fermeture (20) qui présente, à la suite de l'ouverture de passage (16), une surface cylindrique en complément de l'ouverture de passage, pour en faire une ouverture cylindrique continue.

6. Soupape à membrane selon la revendication 5, caractérisée en ce que le corps de la soupape est conçu, pour l'essentiel, en forme de parallélépipède rectangle et que les pièces de fermeture (20) sont disposées dans les évidements (18) de celui-ci et formées de façon semi-cylindrique avec un évidemment semi-cylindrique (22) faisant face à l'ouverture de passage (16) et la complétant.

7. Soupape à membrane selon la revendication 5, caractérisée en ce que le corps de la soupape est conçu, pour l'essentiel, en forme tubulaire et que les pièces de fermeture (20) sont conçues comme coquilles semi-cylindriques et entourent le corps de soupape de l'extérieur.
